# EUROPEAN PATENT SPECIFICATION

(11) **EP 4 205 892 B1**
(45) Date of publication and mention of the grant of the patent: **20.08.2025**
(21) Application number: 22214922.1
(22) Date of filing: 20.12.2022
(51) Int. Cl.: B23D 47/04, B27B 5/065

(54) **METHOD FOR CUTTING PIECES**
VERFAHREN ZUM SCHNEIDEN VON STÜCKEN
PROCÉDÉ DE COUPE DE PIÈCES

(30) Priority: 30.12.2021 IT 202100033092
(43) Date of publication of application: 05.07.2023
(73) Proprietor: SCM Group S.p.A., 47921 Rimini (RN) (IT)
(72) Inventor: TONTINI, Gianluca, 47921 RIMINI (RN) (IT)
(74) Representative: Tiburzi, Andrea

(56) References cited:
- EP-A1- 2 377 652
- DE-A1- 102017 121 956
- US-A- 4 392 401

## Description

The present invention relates to an improved method for cutting pieces.

More specifically, the invention relates to a method of cutting pieces made of wood but also made of ceramic, glass, fiberglass, plastic, metal, and the like, which allows obtaining a plurality of pieces, starting from a single piece, according to a pattern of pre-established cut, using a reduced number of sizing steps, to obtain the pre-established pieces.

In the following, the description will be directed to a cutting method implemented by a cutting machine, but it is clear that the same should not be considered limited to this specific use.

As is well known, machines for cutting wooden pieces are currently used, in particular cutting machines, which comprise at least one processing station for cutting the pieces according to a cutting direction.

A cutting machine usually comprises a loading station for a piece or a pack of pieces, a processing station, and an output or unloading station, usually provided with a plane, from which the machined pieces are taken by an operator or by a mechanical arm.

The pieces are usually moved by means of a handling device, from the loading station to the working station.

Subsequently, the pieces are cut by means of a machining unit, in particular a disc blade, which slides along a cutting direction.

The cutting operations are repeated until all the pre-established pieces have been obtained, starting from the initial pieces, according to a pre-established cutting pattern.

An operator or a mechanical arm picks up the cut pieces from the loading station and reinserts the pieces to be cut further, into the loading station, or directly near the working station.

The handling member, commonly identified with the "pusher" group, comprises a system of grippers suitable for gripping the rear portion of the panel with respect to the feed direction. This gripper system is supported above the workpiece support surface by a support structure, which is movable along the feed direction by means of actuator means. Machines equipped with a single pusher unit, therefore, do not allow cuts to be made in a single cutting step on more than one panel or pack of panels.

In order to carry out the simultaneous cutting of two panels, known cutting machines are usually used comprising a plurality of pusher units movable along the feed direction independently of each other. In particular, each of said supply means has respective actuating members. In this way it is possible to make staggered or differential cuts, i.e., it is possible to make the simultaneous cut of two panels positioned along the feed direction at different heights or positions.

It is clear that machines which have two pusher units are mechanically complex and consequently are considerably more expensive than machines with a single pusher unit.
Document DE102017121956 (D1) discloses a machine and a method for cutting pieces like panels.

In light of the above, it is, therefore, the object of the present invention to provide a method for cutting wooden pieces capable of minimizing the movement of the processing unit, in order to reduce cutting times.

A further object of the present invention is to provide a method for cutting wooden pieces, capable of reducing the number of reinsertions of the pieces into the machine.

A further purpose of the present invention is to carry out "simultaneous" cuts, i.e., in a single cutting step on different panels in a machine with a single pusher unit.

It is, therefore, the specific object of the present invention a method for cutting at least one piece or pack of pieces, made of wood, plastic, glass, fiberglass, ceramic, and metal, by means of a cutting machine, of the type comprising at least a loading/unloading station of said at least one piece or pack of pieces, a working station comprising a working plane, to support said at least one piece or pack of pieces, a movement group for moving said at least one piece or pack of pieces along an advancement direction, approaching and/or moving away from said machining station, and a cutting group movable along a cutting line orthogonal to said advancement direction, to cut said at least one piece or pack of pieces according to a predefined cutting pattern, a logical control unit, for controlling the movement of said cutting group and said movement group, in which predetermined cutting patterns that said working station has to perform on said at least one piece or pack of pieces are stored, said method comprising the following steps:
*a.* loading said at least one piece or pack of pieces in said loading/unloading station;
*b.* moving said at least one piece or pack of pieces towards said working station, by means of said movement group, until reaching a first predetermined cutting position of said piece or pack of pieces, along said advancement direction, on said cutting line;
*c.* carrying out a first cut according to a predetermined cutting pattern, to obtain a first portion and a second portion, from said at least one piece or pack of pieces;
*d.* positioning said first portion on said loading/unloading station so that it can be moved by said movement group;
*e.* moving said first and second portion through said movement group, until reaching a second predetermined cutting position of said second portion, along said advancement direction, on said cutting line;
*f.* carrying out a second cut according to said predetermined cutting pattern, so as to obtain a third portion and a fourth portion from said second portion;
*g.* arranging said cutting unit in a predetermined position of said cutting line according to said predetermined cutting pattern;
*h.* carrying out a third cut according to said predetermined cutting pattern, so as to obtain a fifth portion, and a sixth portion from said first portion.

Further according to the invention, said predetermined position is a free position along said cutting line, namely not occupied by one or more portions resting on said working plane of said cutting machine.

Still according to the invention, said working station comprises a reference device coupled to said working plane, characterized in that it comprises the following sub-step:
*d.1.* positioning said first portion on said loading/unloading station in a reference position, identified by said reference device.

Always according to the invention, said reference device comprises a reference bar, arranged in proximity to one end of said cutting line.

Preferably according to the invention, said method comprises the following sub-step, to be carried out between said step *g.* and said step *h.*:
*g.1.* move at least said first portion along said advancement direction by means of said movement group until reaching a third predetermined cutting position of said first portion along said advancement direction, on said cutting line.

Further according to the invention, said processing station comprises a pressure device, characterized in that it comprises a further step, to be carried out before said steps *c., f.,* and *h.*:
*i.* moving said pressing device from an upper release position, wherein said piece or pack of pieces is released, to a lower clamping position of said piece or pack of pieces, wherein said piece or pack of pieces is held by a force from top to bottom against said working plane when said piece or pack of pieces is being machined.

Still according to the invention, said handling assembly comprises
at least one beam supported by a support frame, movable on said support frame along said advancement direction, and a plurality of pliers to grasp and move said piece or pack of pieces.

Always according to the invention, said cutting unit comprises a carriage movable along said cutting line and at least one disc blade, capable of coming out from said working plane, to cut said piece or pack of pieces, through a slot, obtained on said working plane.

Preferably according to the invention, said carriage is further movable along a vertical direction to move said at least one disc blade between an operating position, in which said disc blade protrudes from said working plane through said slot, and a rest position, in which said disc blade is below said working plane, characterized in that it comprises a further step, to be performed after said step *h*.:
*j*. when said cutting unit is in said predetermined position, moving said disc blade from said operative position to said rest position.

Further according to the invention, said cutting machine comprises a detection system configured to detect the presence of a piece or pack of pieces arranged above said cutting unit, characterized in that it comprises the following further step, to be carried out after said step *g.*:
k. when said cutting unit is in said predetermined position, checking by means of said detection system that there is no piece or pack of pieces above said cutting unit.

Still according to the invention, said logic control unit is configured to emit visual and/or acoustic and/or tactile signals according to the data detected by said detection system, characterized in that it comprises the following further step, to be carried out after said step *k*.:
*l*. if said detection system detects the presence of a piece or pack of pieces above said cutting unit, when it is in said predetermined position, send via said logic control unit said signals to wearable devices, and/or mobile devices, and/or *desktop* PC.

Always according to the invention, said method may comprise the following further step:
*m*. sending said signals by means of said control logic unit to a *cloud* server, which in its turn sends said signals to wearable devices, and/or mobile devices, and/or *desktop* PC.

The present invention will be now described, for illustrative but not limitative purposes, according to its preferred embodiments, with particular reference to the figures of the enclosed drawings, wherein:
figure 1 shows a top view of a cutting machine that implements the improved method for cutting pieces, object of the present invention;
figure 2 shows a further top view of the machine of figure 1;
figure 3 shows a further top view of the machine of figure 1, in a configuration for carrying out a certain step of the method;
figure 3a shows a further top view of the machine of figure 1, in a configuration for carrying out a given step of the method;
figure 4 shows a further top view of the machine of figure 1, in a configuration for carrying out a further determined step of the method;
figure 5 shows a further top view of the machine of figure 1, in a configuration for carrying out a further specific step of the method;
figure 6 shows a further top view of the machine of figure 1, in a configuration for carrying out a further determined step of the method;
figure 7 shows a block diagram of the steps included in the method object of the present invention.

In the various figures, similar parts will be indicated with the same reference numbers.

With reference to the attached figures, the cutting machine M is described which implements an improved method for cutting pieces P, in particular panels made of wood, ceramic, glass, fibreglass, plastic, metal, and the like.

In the following description, reference will be made to a cutting machine M and to pieces, which are wooden panels P or bundles of wooden panels, arranged stacked one on top of the other.

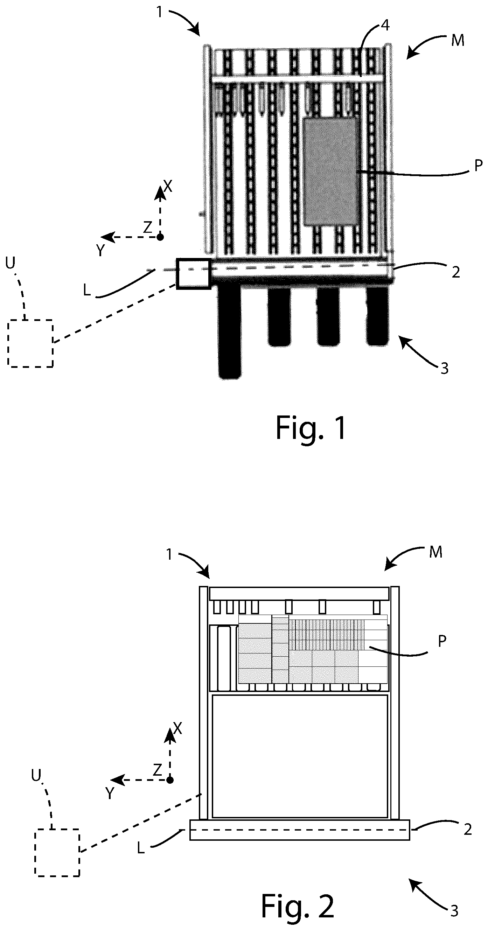

Referring in particular to figure 1, the cutting machine M essentially comprises an input or loading station 1 of the piece P, at least one machining station 2 for carrying out a respective machining on one or more pieces P, an output or unloading station 3, and a logic control unit U, in which pre-established cutting patterns are stored.

Said output or unloading station 3 can also be used as a loading station for the pieces to be reinserted into the cutting machine M to perform further cuts.

The pieces P that must be subjected to machining are arranged on a support surface of said at least one loading station 1, and advance on said support surface along an advancement direction X, until they reach the machining station 2, by means of a thrust exerted by one or more movement units, such as pushers, each of which can comprise one or more gripping and thrusting elements, such as for example pliers for gripping and moving the piece P to be worked.

The working station 2 comprises a working unit, not shown in the figure, in particular a cutting unit, and a work table on which the piece P to be cut is rested.

Said cutting unit comprises a carriage movable along a machining direction Y, which is, in turn, perpendicular to said advancement direction X, in a longitudinal chamber formed under said work plane.

Movement means are also provided in said cutting machine M for moving said carriage along said working direction, in both travel directions.

The machining unit is mounted on said carriage, in particular, a circular blade, which slides along said machining direction, performing back and forth strokes.

Said circular blade lies on a Y-Z plane, defined by said machining direction Y and by a development direction, orthogonal to said advancement direction X and machining direction Y.

Said machining unit can also comprise a blade for making an incision, in addition to the blade that performs the cut.

A longitudinal slot is formed in the work surface itself, which extends along said working direction.

Above said work surface there is a blocking means such as a pressure member, which extends along said working direction Y, and is movable along said development direction Z, between a raised rest position and a lowered working position, so such as to allow the piece P to be machined to be locked between the working plane and the pressure member itself.

Said circular blade is capable of crossing said longitudinal slot, protruding from said working plane for a given portion, so as to cut the piece P along a cutting line L, parallel to said machining direction Y.

Said circular blade is also rotatable around a rotation axis orthogonal to said plane Y-Z, and therefore parallel to said advancement direction X.

Dedicated handling means are also provided in said carriage for rotating said circular blade around its rotation axis.

The pieces P machined by the working station 2 of the cutting machine M reach a support surface of an unloading station 3 and are picked up by an operator or by a mechanical arm.

Said control logic unit U is capable of controlling the movement of said one or more movement groups, of said pressers and of said cutting group, in order to perform a predetermined memorized cutting pattern.

Said control logic unit U comprises a modality reception and *wireless* transmission module.

Said cutting machine M can comprise or can be connected to mobile electronic devices and/or a *cloud* infrastructure, as a *server.*

A mobile electronic device is any electronic device, such as one *smartphone,* and *tablet,* a laptop, or the like.

Therefore, said logic control unit U can be configured to send operating data of said cutting machine M to said one or more mobile electronic devices.

Furthermore, said logic control unit U can be configured to send said operating data of said cutting machine M also to a *cloud server,* and the latter can be configured to send said data to said one or more mobile electronic devices.

Said cutting machine M also comprises a detection system configured to detect the presence of a piece or pack of pieces P arranged above said cutting unit, capable of communicating with said control logic unit U.

Said detection system can be an optical or acoustic sensor, a load cell and can be arranged either on the cutting unit or on the work surface or on the presser.

Said control logic unit U is configured to emit visual and/or acoustic and/or tactile signals according to the data detected by said detection system.

The operation of the cutting machine M is according to the following improved method of cutting pieces P.

When it is necessary to carry out machining on at least one piece P, or on a stack of wooden pieces P stacked one on top of the other, it is first of all necessary to arrange the piece P to be worked on said loading area 1.

With reference in particular to figures 1-3, subsequently said piece P is moved by said one or more handling units until it reaches a first predetermined cutting position along said advancement direction X, so that the piece P is arranged on said working plane and above said longitudinal slot.

Said pressure member is brought to the respective lowered position so as to block the piece P to be machined between the pressure member and the underlying working surface.

Once the piece P has been blocked in position, and the rotation of said circular blade has been activated, the mobile carriage moves from the rest position to the operating position, thus allowing a first cut T₁ of the piece P by the circular blade, according to the cutting pattern memorized in said control logic unit U and selected.

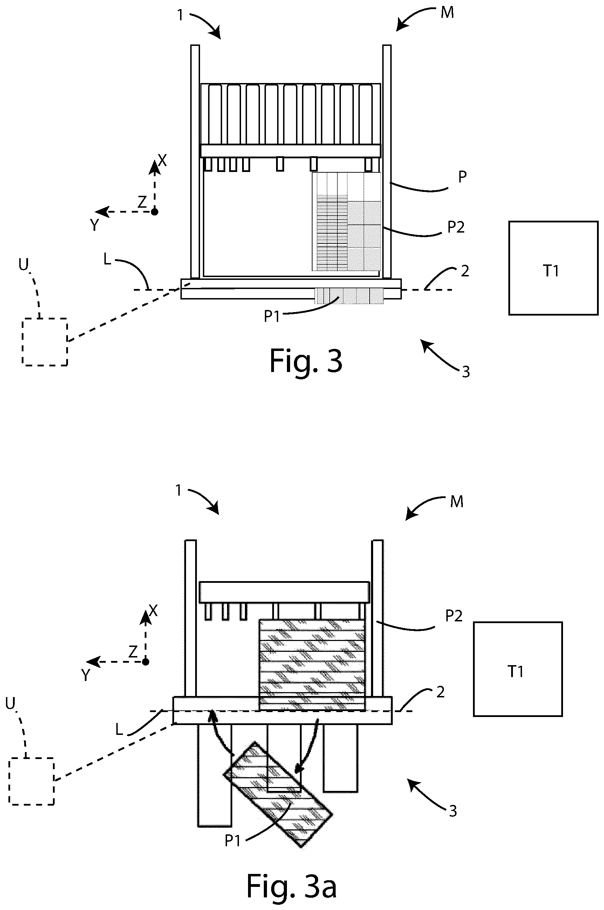

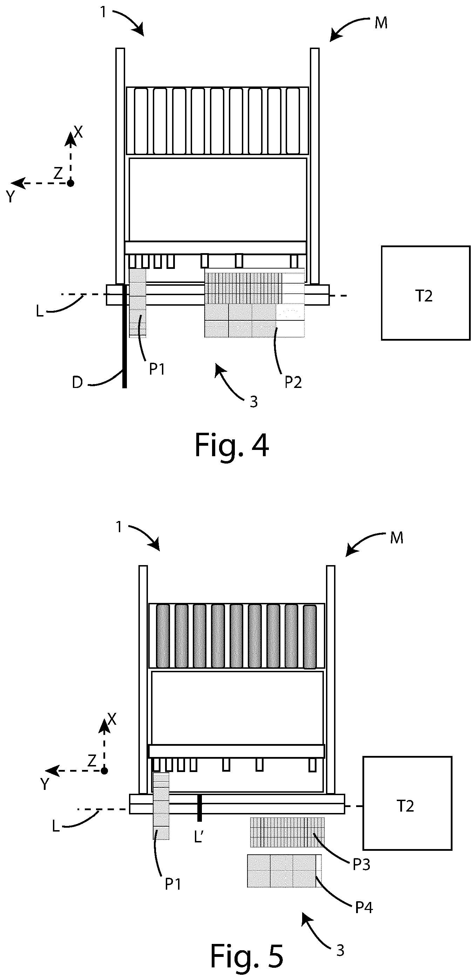

Referring to figures 3-5, following the first cut T₁ of said piece P, a first portion P₁ and a second portion P₂ are obtained.

Said first portion P₁ is loaded again at the input of the sectioning machine M, and arranged on said unloading area 3, in a reference position identified by a reference device D provided on said working plane itself.

Subsequently, said first portion P₁ and second portion P₂ are moved towards said processing area 2 by means of said one or more movement groups, until reaching a second predetermined cutting position for said second portion P₂, along said advancement direction X.

The first portion P₁ and the second portion P₂ are blocked again and a second cut T₂ is made according to said predetermined cutting pattern, so as to obtain a third portion P₃ and a fourth portion P₄ from said second portion P₂.

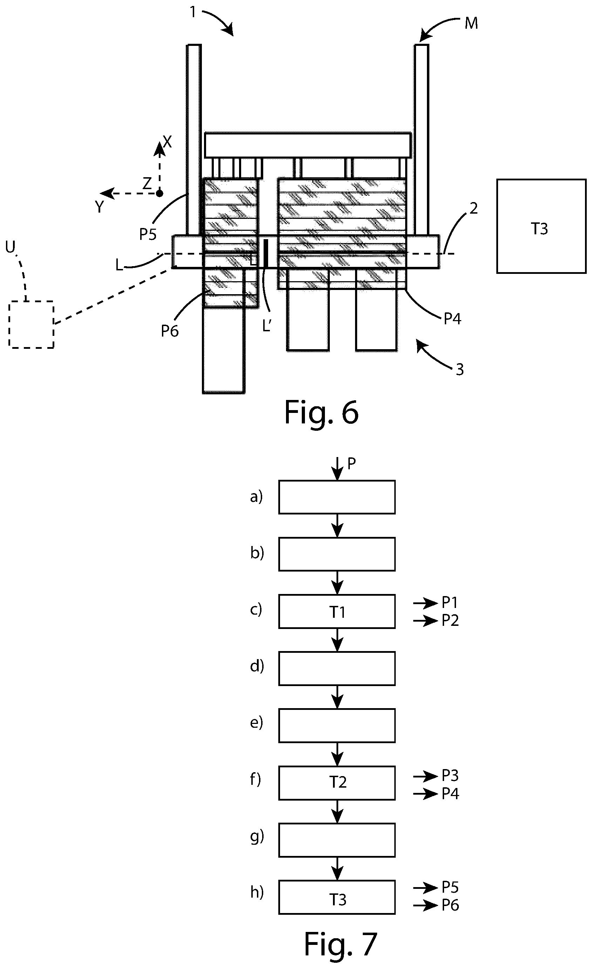

With reference to figure 6, subsequently said cutting unit is arranged in a predetermined position L', along said cutting line L, free i.e. not covered by said second portion P₂ and one or more portions Pₙ, which rest on said work plane, according to said predetermined cutting pattern.

A third cut T₃ is then made, according to said predetermined cutting pattern, so as to obtain a fifth portion P₅, and a sixth portion P₆ from said second portion P₂.

Said control logic unit U is, therefore, able to control said cutting unit, so that it stops in a predetermined position L' of said cutting line L, and does not return to the start of the stroke before performing the cut on the first portion P₁.

It is possible that, before making said third cut, T₃, it is necessary that said first portion P₁ and one of the portions Pₙ deriving from the cutting of said second portion P₂ are moved by said one or more movement units to reach a third predetermined cutting position along said movement direction.

When the entire selected cutting pattern is performed, starting from the initial piece P, the cutting machine M ends the machining or starts a new machining on another piece.

As apparent from the above description, the improved method for cutting wooden pieces, object of the present invention, allows the repeated cutting of different portions of the initial piece, with a minimum number of reinsertions into the machine, and with the movement of said cutting unit at predetermined positions on the cutting line.

The present invention has been described for illustrative but not limitative purposes, according to its preferred embodiments, but it is to be understood that modifications and/or changes can be introduced by those skilled in the art without departing from the scope of the invention as defined in the enclosed claims.

## Claims

1. Method for cutting at least one piece or pack of pieces (P), made of wood, plastic, glass, fiberglass, ceramic, and metal, by means of a cutting machine (M), of the type comprising
at least a loading/unloading station (1,3) of said at least one piece or pack of pieces (P),
a working station (2) comprising a working plane, to support said at least one piece or pack of pieces (P),
a movement group for moving said at least one piece or pack of pieces (P) along an advancement direction (X), approaching and/or moving away from said working station (2), and a cutting group movable along a cutting line (L) orthogonal to said advancement direction (X), to cut said at least one piece or pack of pieces (P) according to a predefined cutting pattern,
a logical control unit (U), for controlling the movement of said cutting group and said movement group, in which predetermined cutting patterns that said working station (2) has to perform on said at least one piece or pack of pieces (P) are stored, said method comprising the following steps:
*a.* loading said at least one piece or pack of pieces (P) in said loading/unloading station (1, 3);
*b.* moving said at least one piece or pack of pieces (P) towards said working station (2), by means of said movement group, until reaching a first predetermined cutting position of said piece or pack of pieces (P), along said advancement direction (X), on said cutting line (L);
*c.* carrying out a first cut (T₁) according to a predetermined cutting pattern, to obtain a first portion (P₁) and a second portion (P₂), from said at least one piece or pack of pieces (P);
*d.* positioning said first portion (P₁) on said loading/unloading station (1,3) so that it can be moved by said movement group;
*e.* moving said first (P₁) and second (P₂) portion through said movement group, until reaching a second predetermined cutting position of said second portion (P₂), along said advancement direction (X), on said cutting line (L);
*f.* carrying out a second cut (T₂) according to said predetermined cutting pattern, so as to obtain a third portion (P₃) and a fourth portion (P₄) from said second portion (P₂);
*g.* arranging said cutting unit in a predetermined position (L') of said cutting line (L) according to said predetermined cutting pattern;
*h.* carrying out a third cut (T₃) according to said predetermined cutting pattern, so as to obtain a fifth portion (P₅), and a sixth portion (P₆) from said first portion (P₁).

2. Method according to the preceding claim, **characterized in that** said predetermined position (L') is a free position along said cutting line (L), namely not occupied by one or more portions (Pₙ) resting on said working plane of said cutting machine (M).

3. Method according to any one of the preceding claims, wherein said working station (2) comprises a reference device (D) coupled to said working plane, **characterized in that** it comprises the following sub-step:
*d.1.* positioning said first portion (P₁) on said loading/unloading station (1, 3) in a reference position, identified by said reference device (D).

4. Method according to the preceding claim, wherein said reference device (D) comprises a reference bar, arranged in proximity to one end of said cutting line (L).

5. Method according to any one of the preceding claims, **characterized in that** it comprises the following sub-step, to be carried out between said step g. and said step h.:
*g.1.* move at least said first portion (P₁) along said advancement direction (X) by means of said movement group until reaching a third predetermined cutting position of said first portion (P₁) along said advancement direction (X), on said cutting line (L).

6. Method according to any one of the preceding claims, wherein said processing station comprises a pressure device, **characterized in that** it comprises a further step, to be carried out before said steps *c., f.,* and *h.:*
i. moving said pressing device from an upper release position, wherein said piece or pack of pieces (P) is released, to a lower clamping position of said piece or pack of pieces (P), wherein said piece or pack of pieces (P) is held by a force from top to bottom against said working plane when said piece or pack of pieces (P) is being machined.

7. Method according to any one of the preceding claims, wherein said handling assembly comprises
at least one beam (4) supported by a support frame, movable on said support frame along said advancement direction (X), and
a plurality of pliers to grasp and move said piece or pack of pieces (P).

8. Method according to any one of the preceding claims, wherein said cutting unit comprises a carriage movable along said cutting line (L) and at least one disc blade, capable of coming out from said working plane, to cut said piece or pack of pieces (P), through a slot, obtained on said working plane.

9. Method according to the preceding claim, wherein said carriage is further movable along a vertical direction (Z) to move said at least one disc blade between an operating position, in which said disc blade protrudes from said working plane through said slot, and a rest position, in which said disc blade is below said working plane, **characterized in that** it comprises a further step, to be performed after said step *h.*:
*j*. when said cutting unit is in said predetermined position (L'), moving said disc blade from said operative position to said rest position.

10. Method according to any one of the preceding claims, wherein said cutting machine (M) comprises a detection system configured to detect the presence of a piece or pack of pieces (P) arranged above said cutting unit, **characterized in that** it comprises the following further step, to be carried out after said step *g*.:
*k.* when said cutting unit is in said predetermined position (L'), checking by means of said detection system that there is no piece or pack of pieces (P) above said cutting unit.

11. Method according to the preceding claim, wherein said logic control unit (U) is configured to emit visual and/or acoustic and/or tactile signals according to the data detected by said detection system, **characterized in that** it comprises the following further step, to be carried out after said step *k*.:
*l*. if said detection system detects the presence of a piece or pack of pieces (P) above said cutting unit, when it is in said predetermined position (L'), send via said logic control unit (U) said signals to wearable devices, and/or mobile devices, and/or *desktop* PC.

12. Method according to the preceding claim, **characterized in that** it comprises the following further step:
m. sending said signals by means of said control logic unit (U) to a *cloud* server, which in its turn sends said signals to wearable devices, and/or mobile devices, and/or *desktop* PC.

## Patentansprüche

1. Verfahren zum Schneiden mindestens eines Teils oder eines Pakets von Teilen (P) aus Holz, Kunststoff, Glas, Glasfaser, Keramik und Metall mit Hilfe einer Schneidemaschine (M) des Typs, der Folgendes umfasst mindestens eine Be-/Entladestation (1,3) für das mindestens eine Stück oder die mindestens eine Packung von Stücken (P),
eine Arbeitsstation (2), die eine Arbeitsebene umfasst, um das mindestens eine Teil oder das Paket von Teilen (P) zu tragen,
eine Bewegungsgruppe zum Bewegen des mindestens einen Stücks oder Pakets von Stücken (P) entlang einer Vorschubrichtung (X), die sich der Arbeitsstation (2) nähert und/oder von ihr wegbewegt, und eine Schneidegruppe, die entlang einer Schneidelinie (L) orthogonal zu der Vorschubrichtung (X) beweglich ist, um das mindestens eine Stück oder Paket von Stücken (P) gemäß einem vordefinierten Schneidemuster zu schneiden,
eine logische Steuereinheit (U) zum Steuern der Bewegung der Schneidegruppe und der Bewegungsgruppe, in der vorbestimmte Schneidemuster, die die Arbeitsstation (2) an dem mindestens einen Stück oder Stapel von Stücken (P) durchführen muss, gespeichert sind, wobei das Verfahren die folgenden Schritte umfasst:
*a.* Laden des mindestens einen Stücks oder Pakets von Stücken (P) in die Lade-/Entladestation (1, 3);
*b*. Bewegen des mindestens einen Teils oder Pakets von Teilen (P) in Richtung der Arbeitsstation (2) mittels der Bewegungsgruppe, bis eine erste vorbestimmte Schneideposition des Teils oder Pakets von Teilen (P) entlang der Vorschubrichtung (X) auf der Schneidelinie (L) erreicht ist;
*c.* Ausführen eines ersten Schnitts (T₁) gemäß einem vorbestimmten Schnittmuster, um einen ersten Abschnitt (P₁) und einen zweiten Abschnitt (P₂) von dem mindestens einen Stück oder Paket von Stücken (P) zu erhalten;
*d.* Positionieren des ersten Teils (P₁) auf der Be-/Entladestation (1,3), so dass er von der Bewegungsgruppe bewegt werden kann;
*e.* Bewegen des ersten (P₁) und zweiten (P₂) Abschnitts durch die Bewegungsgruppe, bis eine zweite vorbestimmte Schneidposition des zweiten Abschnitts (P₂) entlang der Vorschubrichtung (X) auf der Schneidlinie (L) erreicht ist;
*f.* Ausführen eines zweiten Schnitts (T₂) gemäß dem vorgegebenen Schnittmuster, um einen dritten Abschnitt (P₃) und einen vierten Abschnitt (P₄) aus dem zweiten Abschnitt (P₂) zu erhalten;
*g.* Anordnen der Schneideeinheit in einer vorbestimmten Position (L') der Schnittlinie (L) gemäß dem vorbestimmten Schnittmuster;
*h.* Ausführen eines dritten Schnitts (T₃) gemäß dem vorgegebenen Schnittmuster, um einen fünften Abschnitt (P₅) und einen sechsten Abschnitt (P₆) aus dem ersten Abschnitt (P₁) zu erhalten.

2. Verfahren nach dem vorhergehenden Anspruch, **dadurch gekennzeichnet, dass** die vorbestimmte Position (L') eine freie Position entlang der Schneidelinie (L) ist, nämlich nicht von einem oder mehreren Teilen (Pₙ) eingenommen, die auf der Arbeitsebene der Schneidemaschine (M) ruhen.

3. Verfahren nach einem der vorhergehenden Ansprüche, wobei die Bearbeitungsstation (2) eine mit der Bearbeitungsebene gekoppelte Referenzvorrichtung (D) aufweist, **dadurch gekennzeichnet, dass** es den folgenden Teilschritt umfasst:
*d.* 1. Positionierung des ersten Teils (P₁) auf der Be-/Entladestation (1, 3) in einer Referenzposition, die durch die Referenzvorrichtung (D) identifiziert wird.

4. Verfahren nach dem vorhergehenden Anspruch, wobei die Referenzvorrichtung (D) eine Referenzstange umfasst, die in der Nähe eines Endes der Schneidlinie (L) angeordnet ist.

5. Verfahren nach einem der vorhergehenden Ansprüche, **dadurch gekennzeichnet, dass** es den folgenden Teilschritt umfasst, der zwischen dem Schritt *g.* und dem Schritt *h.* auszuführen ist:
*g.1.* Bewegen zumindest des ersten Abschnitts (P₁) entlang der Vorschubrichtung (X) mittels der Bewegungsgruppe bis zum Erreichen einer dritten vorbestimmten Schneidposition des ersten Abschnitts (P₁) entlang der Vorschubrichtung (X) auf der Schneidlinie (L).

6. Verfahren nach einem der vorhergehenden Ansprüche, wobei die Bearbeitungsstation eine Druckvorrichtung umfasst, **dadurch gekennzeichnet, dass** es einen weiteren Schritt umfasst, der vor den Schritten *c., f*., und *h.* auszuführen ist:
*i.* Bewegen der Pressvorrichtung von einer oberen Freigabeposition, in der das Stück oder der Stapel von Stücken (P) freigegeben wird, in eine untere Klemmposition des Stücks oder des Stapels von Stücken (P), in der das Stück oder der Stapel von Stücken (P) durch eine Kraft von oben nach unten gegen die Arbeitsebene gehalten wird, wenn das Stück oder der Stapel von Stücken (P) bearbeitet wird.

7. Verfahren nach einem der vorhergehenden Ansprüche, wobei die Handhabungseinheit Folgendes umfasst
mindestens einen von einem Tragrahmen getragenen Träger (4), der auf dem Tragrahmen entlang der Vorschubrichtung (X) beweglich ist, und
eine Vielzahl von Zangen zum Ergreifen und Bewegen des Stücks oder des Pakets von Stücken (P).

8. Verfahren nach einem der vorhergehenden Ansprüche, bei dem die Schneideeinheit einen entlang der Schneidelinie (L) beweglichen Schlitten und mindestens ein Scheibenmesser umfasst, das aus der Arbeitsebene herauskommen kann, um das Stück oder den Stapel von Stücken (P) durch einen auf der Arbeitsebene erhaltenen Schlitz zu schneiden.

9. Verfahren nach dem vorhergehenden Anspruch, bei dem der Schlitten ferner entlang einer vertikalen Richtung (Z) bewegbar ist, um das mindestens eine Scheibenblatt zwischen einer Betriebsposition, in der das Scheibenblatt durch den Schlitz aus der Arbeitsebene herausragt, und einer Ruheposition, in der sich das Scheibenblatt unterhalb der Arbeitsebene befindet, zu bewegen, **dadurch gekennzeichnet, dass** es einen weiteren Schritt umfasst, der nach dem Schritt *h*. auszuführen ist:
*j*. wenn die Schneideeinheit in der vorbestimmten Position (L') ist, Bewegen des Scheibenmessers von der Betriebsposition in die Ruheposition.

10. Verfahren nach einem der vorhergehenden Ansprüche, wobei die Schneidemaschine (M) ein Erfassungssystem umfasst, das so konfiguriert ist, dass es das Vorhandensein eines Stücks oder eines Pakets von Stücken (P) erfasst, das über der Schneideeinheit angeordnet ist, **dadurch gekennzeichnet, dass** es den folgenden weiteren Schritt umfasst, der nach dem Schritt *g*. auszuführen ist:
*k.* wenn sich die Schneideeinheit in der vorbestimmten Position (L') befindet, mit Hilfe des Erfassungssystems zu überprüfen, dass sich kein Stück oder Paket von Stücken (P) oberhalb der Schneideeinheit befindet.

11. Verfahren nach dem vorhergehenden Anspruch, wobei die logische Steuereinheit (U) so konfiguriert ist, dass sie optische und/oder akustische und/oder taktile Signale in Abhängigkeit von den durch das Erfassungssystem erfassten Daten ausgibt, **dadurch gekennzeichnet, dass** es den folgenden weiteren Schritt umfasst, der nach dem Schritt *k.* auszuführen ist:
*I*. wenn das Erfassungssystem das Vorhandensein eines Stücks oder eines Pakets von Stücken (P) oberhalb der Schneideeinheit erfasst, wenn diese sich in der vorbestimmten Position (L') befindet, über die logische Steuereinheit (U) die Signale an tragbare Geräte und/oder mobile Geräte und/oder Desktop-PCs senden.

12. Verfahren nach dem vorherigen Anspruch, **dadurch gekennzeichnet, dass** es den folgenden weiteren Schritt umfasst:
*m.* Senden der Signale mittels der Steuerlogikeinheit (U) an einen *Cloud*-Server, der seinerseits die Signale an tragbare Geräte und/oder mobile Geräte und/oder Desktop-PCs sendet.

## Revendications

1. Procédé pour couper au moins une pièce ou un paquet de pièces (P), en bois, plastique, verre, fibre de verre, céramique et métal, au moyen d'une machine à couper (M), du type comprenant
au moins un poste de chargement/déchargement (1,3) de ladite au moins une pièce ou paquet de pièces (P),
un poste de travail (2) comprenant un plan de travail, pour supporter ladite au moins une pièce ou un paquet de pièces (P),
un groupe de mouvement pour déplacer ladite au moins une pièce ou paquet de pièces (P) le long d'une direction d'avancement (X), en s'approchant et/ou en s'éloignant de ladite station de travail (2), et un groupe de coupe mobile le long d'une ligne de coupe (L) orthogonale à ladite direction d'avancement (X), pour couper ladite au moins une pièce ou paquet de pièces (P) selon un schéma de coupe prédéfini,
une unité de commande logique (U), pour contrôler le mouvement dudit groupe de coupe et dudit groupe de mouvement, dans laquelle sont stockés des schémas de coupe prédéterminés que le poste de travail (2) doit exécuter sur ladite au moins une pièce ou paquet de pièces (P), ledit procédé comprenant les étapes suivantes:
*a.* charger ladite au moins une pièce ou un paquet de pièces (P) dans ladite station de chargement/déchargement (1,3);
*b.* déplacer ladite au moins une pièce ou paquet de pièces (P) vers ledit poste de travail (2), au moyen dudit groupe de déplacement, jusqu'à atteindre une première position de coupe prédéterminée de ladite pièce ou paquet de pièces (P), le long de ladite direction d'avancement (X), sur ladite ligne de coupe (L);
*c.* effectuer une première coupe (T₁) selon un schéma de coupe prédéterminé, pour obtenir une première portion (P₁) et une seconde portion (P₂), à partir dudit au moins un morceau ou paquet de morceaux (P);
*d.* positionner ladite première partie (P₁) sur ladite station de chargement/déchargement (1,3) de manière à ce qu'elle puisse être déplacée par ledit groupe de mouvement;
*e.* déplacer lesdites première (P₁) et seconde (P₂) portions à travers ledit groupe de mouvement, jusqu'à atteindre une seconde position de coupe prédéterminée de ladite seconde portion (P₂), le long de ladite direction d'avancement (X), sur ladite ligne de coupe (L);
*f.* effectuer une deuxième coupe (T₂) selon ledit schéma de coupe prédéterminé, de manière à obtenir une troisième portion (P₃) et une quatrième portion (P₄) à partir de ladite deuxième portion (P₂):
*g.* disposer ladite unité de coupe dans une position prédéterminée (L') de ladite ligne de coupe (L) selon ledit schéma de coupe prédéterminé;
*h.* effectuer une troisième coupe (T₃) selon ledit schéma de coupe prédéterminé, de manière à obtenir une cinquième portion (P₅) et une sixième portion (P₆) à partir de ladite première portion (P₁).

2. Procédé selon la revendication précédente, **caractérisé en ce que** ladite position prédéterminée (L') est une position libre le long de ladite ligne de coupe (L), c'est-à-dire non occupée par une ou plusieurs portions (Pₙ) reposant sur ledit plan de travail de ladite machine de coupe (M).

3. Procédé selon l'une quelconque des revendications précédentes, dans lequel ledit poste de travail (2) comprend un dispositif de référence (D) couplé audit plan de travail, **caractérisé en ce qu'**il comprend la sous-étape suivante:
*d.* 1. positionnement de ladite première partie (P₁) sur ladite station de chargement/déchargement (1,3) dans une position de référence, identifiée par ledit dispositif de référence (D).

4. Procédé selon la revendication précédente, dans lequel ledit dispositif de référence (D) comprend une barre de référence, disposée à proximité d'une extrémité de ladite ligne de coupe (L).

5. Procédé selon l'une quelconque des revendications précédentes, **caractérisé en ce qu'**il comprend la sous-étape suivante, à réaliser entre ladite étape g, et ladite étape h.:
*g.1.* déplacer au moins ladite première partie (P₁) le long de ladite direction d'avancement (X) au moyen dudit groupe de mouvement jusqu'à atteindre une troisième position de coupe prédéterminée de ladite première partie (P₁) le long de ladite direction d'avancement (X), sur ladite ligne de coupe (L).

6. Procédé selon l'une quelconque des revendications précédentes, dans lequel ledit poste de traitement comprend un dispositif de pression, **caractérisé en ce qu'**il comprend une étape supplémentaire, à effectuer avant lesdites étapes *c., f.,* et *h*.:
*i.* déplacement dudit dispositif de pressage d'une position supérieure de libération, dans laquelle ladite pièce ou paquet de pièces (P) est libéré, à une position inférieure de serrage de ladite pièce ou paquet de pièces (P), dans laquelle ladite pièce ou paquet de pièces (P) est maintenu par une force du haut vers le bas contre ledit plan de travail lorsque ladite pièce ou paquet de pièces (P) est en cours d'usinage.

7. Procédé selon l'une quelconque des revendications précédentes, dans lequel l'ensemble de manutention comprend
au moins une poutre (4) soutenue par un cadre de support, mobile sur ledit cadre de support le long de ladite direction d'avancement (X), et
une pluralité de pinces pour saisir et déplacer la pièce ou le paquet de pièces (P).

8. Procédé selon l'une quelconque des revendications précédentes, dans lequel ladite unité de coupe comprend un chariot mobile le long de ladite ligne de coupe (L) et au moins une lame de disque, capable de sortir dudit plan de travail, pour couper ladite pièce ou paquet de pièces (P), à travers une fente, obtenue sur ledit plan de travail.

9. Procédé selon la revendication précédente, dans lequel ledit chariot est en outre mobile le long d'une direction verticale (Z) pour déplacer ledit au moins un disque entre une position de travail, dans laquelle ledit disque fait saillie dudit plan de travail à travers ladite fente, et une position de repos, dans laquelle ledit disque est en dessous dudit plan de travail, **caractérisé en ce qu'**il comprend une étape supplémentaire, à exécuter après ladite étape *h*.:
*j.* lorsque l'unité de coupe est dans la position prédéterminée (L'), déplacer la lame de disque de la position de travail à la position de repos.

10. Procédé selon l'une quelconque des revendications précédentes, dans lequel ladite machine de découpe (M) comprend un système de détection configuré pour détecter la présence d'une pièce ou d'un paquet de pièces (P) disposé au-dessus de ladite unité de découpe, **caractérisé en ce qu'**il comprend l'étape supplémentaire suivante, à réaliser après ladite étape *g.*:
k. lorsque ladite unité de coupe se trouve dans ladite position prédéterminée (L'), vérifier au moyen dudit système de détection qu'il n'y a pas de pièce ou de paquet de pièces (P) au-dessus de ladite unité de coupe.

11. Procédé selon la revendication précédente, dans lequel ladite unité de commande logique (U) est configurée pour émettre des signaux visuels et/ou acoustiques et/ou tactiles en fonction des données détectées par ledit système de détection, **caractérisé en ce qu'**il comprend l'étape supplémentaire suivante, à exécuter après ladite étape *k.*:
*I*. si ledit système de détection détecte la présence d'une pièce ou d'un paquet de pièces (P) au-dessus de ladite unité de coupe, lorsqu'elle se trouve dans ladite position prédéterminée (L'), envoyer, par l'intermédiaire de ladite unité de commande logique (U), lesdits signaux à des dispositifs portables, et/ou à des dispositifs mobiles, et/ou à un ordinateur de bureau.

12. Procédé selon la revendication précédente, **caractérisé en ce qu'**il comprend l'étape supplémentaire suivante:
*m.* envoyer lesdits signaux au moyen de ladite unité logique de commande (U) à un serveur en nuage qui, à son tour, envoie lesdits signaux aux dispositifs portables, et/ou aux dispositifs mobiles, et/ou à l'ordinateur de bureau.
